# EUROPEAN PATENT APPLICATION

(11) **EP 4 712 515 A1**
(43) Date of publication of application: **18.03.2026**
(21) Application number: 24212586.2
(22) Date of filing: 13.11.2024
(51) Int. Cl.: H04W 4/02

(54) **METHOD AND ELECTRONIC DEVICE OF MATCHING MOBILE DEVICE WITH OBJECT**

(30) Priority: 11.09.2024 TW 113134432
(71) Applicant: Industrial Technology Research Institute, 310401 Hsinchu (TW)
(72) Inventor: Wang, Wei-Cheng, Hsinchu City 300045 (TW)
(74) Representative: Kurig, Thomas

(57) **Abstract**

A method and an electronic device (100) of matching a mobile device (200) with an object are provided. The method includes: receiving first positioning information of a first mobile device (200) and first sensed information of a first object; determining whether the first mobile device (200) and the first object are located in a first area (A, B, C, D, E, F, G, H, I, J, K, L, M, N, O, P) according to the first positioning information and the first sensed information; in response to determining the first mobile device (200) and the first object are located in the first area (A, B, C, D, E, F, G, H, I, J, K, L, M, N, O, P), matching the first mobile device (200) with the first object to generate a matching result; and outputting the matching result.

## Description

### TECHNICAL FIELD

The disclosure relates to a wireless communication technology, and in particular to a method and an electronic device of matching a mobile device with an object.

### BACKGROUND

During the process of advancing from 5G to 6G, the application scenario of applying perception abilities to assist communication has been proposed. In the 6G joint communication and sensing (JCAS) architecture, the communication system may use sensed data to understand information about the surrounding environment, and make appropriate adjustments to communication parameters according to the environmental information, so as to improve communication quality. However, current perception-assisted communication technologies cannot match sensed data and individual users. Therefore, telecom operators cannot provide personalized services to individual users based on the perception-assisted communication technologies.

### SUMMARY

A method and an electronic device of matching a mobile device with an object are introduced herein, which can generate a matching result of the mobile device and the object.

A method of matching a mobile device with an object of the disclosure includes the following steps. First positioning information of a first mobile device and first sensed information of a first object are received. Whether the first mobile device and the first object are located in a first area is determined according to the first positioning information and the first sensed information. In response to determining that the first mobile device and the first object are located in the first area, the first mobile device is matched with the first object to generate a matching result. The matching result is output.

An electronic device of the disclosure includes a processor, a storage medium, and a transceiver. The storage media stores multiple modules. The processor is coupled to the storage medium and the transceiver, and accesses and executes multiple modules. The modules include a positioning module, a sensing module, an area dividing module, and a matching module. The positioning module receives first positioning information of a first mobile device through the transceiver. The sensing module receives first sensed information of a first object through the transceiver. The area dividing module determines whether the first mobile device and the first object are located in a first area according to the first positioning information and the first sensed information. The matching module matches the first mobile device with the first object in response to determining that the first mobile device and the first object are located in the first area to generate a matching result. The matching module outputs the matching result.

Based on the above, the disclosure may provide a user with the matching result of the mobile device and the object. The user may provide a personalized service to a holder of the mobile device according to the matching result.

Several exemplary embodiments accompanied with drawings are described in detail below to further describe the disclosure in detail.

### BRIEF DESCRIPTION OF THE DRAWINGS

The accompanying drawings are included to provide a further understanding, and are incorporated in and constitute a part of this specification. The drawings illustrate exemplary embodiments and, together with the description, serve to explain the principles of the disclosure.
FIG. 1 is a schematic diagram of a process of matching a mobile device with an object according to an embodiment of the disclosure.
FIG. 2 is a schematic diagram of an electronic device according to an embodiment of the disclosure.
FIG. 3 is a flowchart of matching a mobile device with an object according to an embodiment of the disclosure.
FIG. 4 is a schematic diagram of an example of a matching procedure according to an embodiment of the disclosure.
FIG. 5 is a schematic diagram of an example of a matching procedure according to an embodiment of the disclosure.
FIG. 6 is a flowchart of a restore matching procedure according to an embodiment of the disclosure.
FIG. 7 is a schematic diagram of an example of a restore matching procedure according to an embodiment of the disclosure.
FIG. 8 is a schematic diagram of AGV task management in a smart factory according to an embodiment of the disclosure.
FIG. 9 is a schematic diagram of a real-time accident notification based on Internet of Vehicles according to an embodiment of the disclosure.
FIG. 10 is a flowchart of a method of matching a mobile device with an object according to an embodiment of the disclosure.

### DETAILED DESCRIPTION OF DISCLOSURED EMBODIMENTS

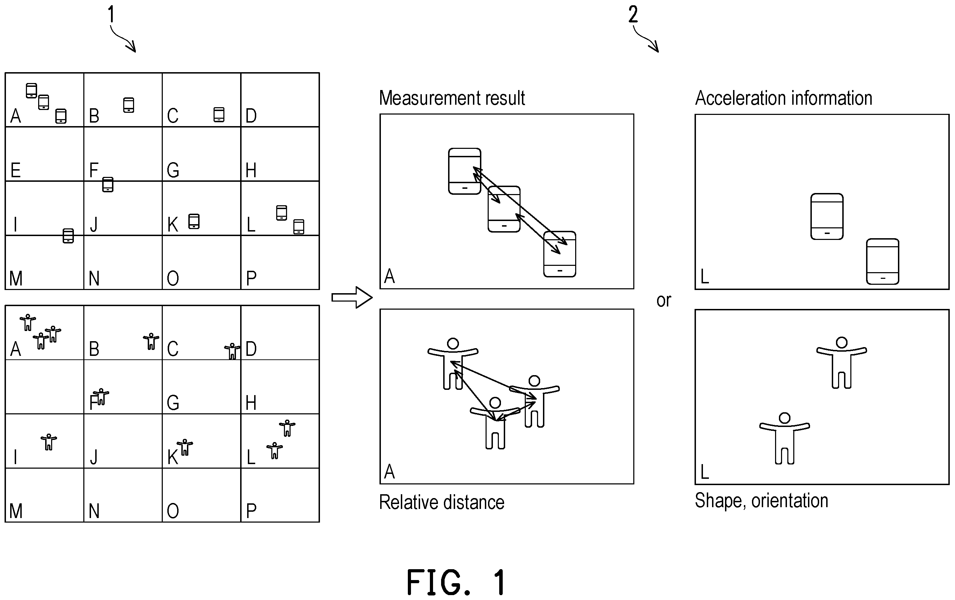

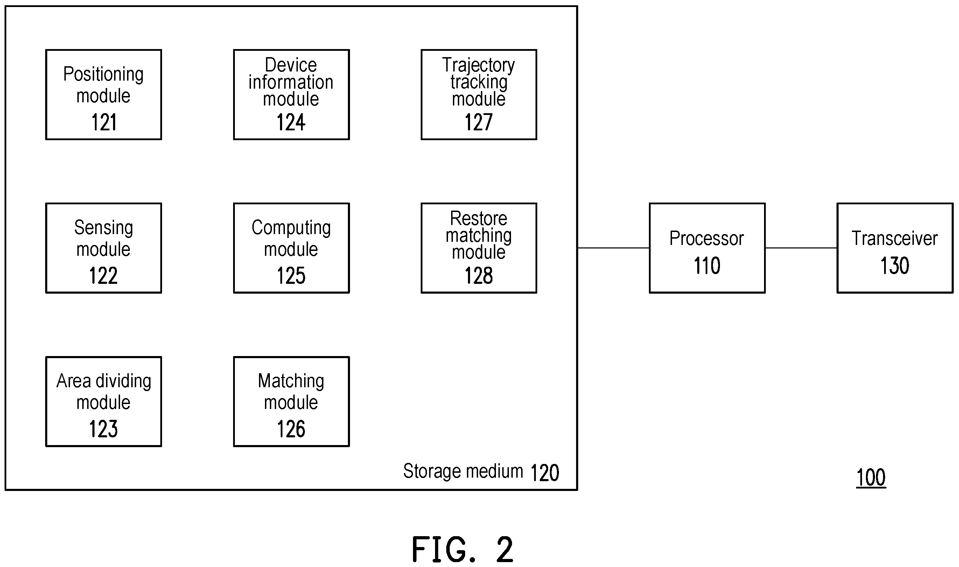

FIG. 1 is a schematic diagram of a process of matching a mobile device with an object according to an embodiment of the disclosure, wherein the process may be implemented by an electronic device 100 shown in FIG. 2. In stage 1, the electronic device 100 may divide a coverage range of the electronic device 100 into multiple areas, and determine positions of each mobile device and each object according to positioning information of the mobile device and sensed information of the object, wherein the areas include an area A, an area B, an area C, an area D, an area E, an area F, an area G, an area H, an area I, an area J, an area K, an area L, an area M, an area N, an area O, and an area P. If one area only includes a single mobile device and a single object, the electronic device 100 may match the single mobile device and the single object to generate a matching result. For example, the area B, the area C, the area F, the area I, or the area K only includes a single mobile device and a single object, so the electronic device 100 may match the single mobile device and the single object in the area in stage 1 to generate the matching result.

However, when the same area includes multiple mobile devices or multiple objects, the above method cannot correctly match the mobile devices with the objects. Accordingly, the electronic device 100 may execute stage 2. In stage 2, if the number of mobile devices and the number of objects in an area is greater than two, the electronic device 100 may use channel measurement results between the mobile devices and relative distances between the objects to execute a matching procedure. If the number of mobile devices and the number of objects in an area are equal to two, the electronic device 100 may use acceleration information of the mobile devices and the shapes or the orientations of the objects to execute the matching procedure.

FIG. 2 is a schematic diagram of the electronic device 100 according to an embodiment of the disclosure. The electronic device 100 may include a processor 110, a storage medium 120, and a transceiver 130. The electronic device 100 may include, but is not limited to, a base station, a server, an edge computing device, a cloud server, or a computing platform.

The processor 110 is, for example, a central processing unit (CPU), other programmable general-purpose or specific-purpose micro control units (MCU), microprocessors, digital signal processors (DSP), programmable controllers, application specific integrated circuits (ASIC), graphics processing units (GPU), image signal processors (ISP), image processing units (IPU), arithmetic logic units (ALU), complex programmable logic devices (CPLD), field programmable gate arrays (FPGA), other similar elements, or a combination of the above elements. The processor 110 may be coupled to the storage medium 120 and the transceiver 130, and access and execute multiple modules and various application programs stored in the storage medium 120.

The storage medium 120 is, for example, any type of fixed or removable random access memory (RAM), read only memory (ROM), flash memory, hard disk drive (HDD), solid state drive (SSD), similar elements, or a combination of the above elements to store multiple modules or various application programs that may be executed by the processor 110. In the embodiment, the storage medium 120 may store modules including a positioning module 121, a sensing module 122, an area dividing module 123, a device information module 124, a computing module 125, a matching module 126, a trajectory tracking module 127, and a restore matching module 128, and functions thereof will be explained later.

The transceiver 130 sends or receives signals via wireless or wired means. The transceiver 130 may also execute, for example, low noise amplification, impedance matching, frequency mixing, up or down frequency conversion, filtering, amplification, and similar operations. The processor 110 may be communicatively connected to a mobile device (for example, a user equipment, a terminal device, a wireless communication device, a smartphone, a notebook computer, an on-board computer, or a tablet computer) or a sensor (for example, a millimeter wave radar, a camera, a microphone, a lidar, an ultra-wideband (UWB) sensor, or an infrared sensor) through the transceiver 130.

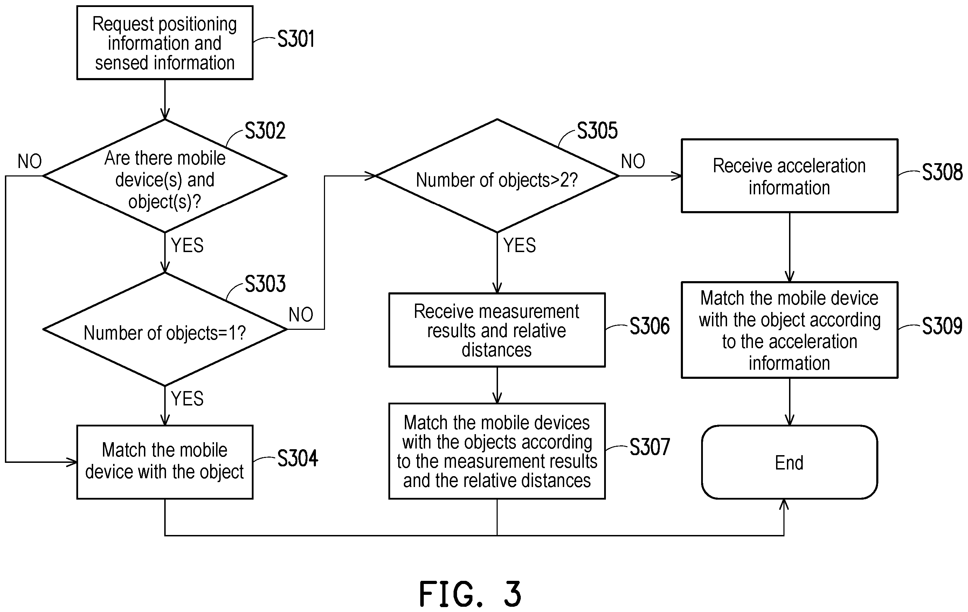

FIG. 3 is a flowchart of matching a mobile device with an object according to an embodiment of the disclosure, wherein the flowchart may be implemented by the electronic device 100 shown in FIG. 2. The object may include a person, a vehicle, or an automated guided vehicle (AGV).

In step S301, the processor 110 may request positioning information of the mobile device and sensed information of the object. Specifically, the processor 110 may send a request message to the mobile device within the coverage range of the electronic device 100 through the transceiver 130 to request the mobile device to report the positioning information. The processor 110 may receive the positioning information reported by the mobile device through the transceiver 130. The positioning information includes, for example, channel state information (CSI), received signal strength indication (RSSI), reference signal received power (RSRP), reference signal received quality (RSRQ), or global positioning system (GPS) information.

On the other hand, the processor 110 may send a request message to a sensor for sensing the object within the coverage range of the electronic device 100 through the transceiver 130 to request the sensor to report the sensed information of the object. The processor 110 may receive the sensed information reported by the sensor through the transceiver 130. The sensed information may be associated with radar signals (for example, millimeter wave radar signals), images, sounds, or light signals (for example, lidar signals or infrared signals). The sensed information may include a position of the object. In an embodiment, the sensed information may further include the orientation or the shape of the object.

In step S302, for each area, the processor 110 may determine whether there are one or multiple mobile devices and one or multiple objects in the area according to the positioning information and the sensed information. Specifically, the processor 110 may divide the coverage range of the electronic device 100 into multiple areas that do not overlap with each other based on information such as the GPS information or the RSSI. The processor 110 may record a mapping relationship between the area and the GPS information (or the RSSI) in a lookup table, and store the lookup table in the storage medium 120. After obtaining the positioning information and the sensed information, the processor 110 may query the lookup table according to the positioning information and the sensed information to determine whether there is any mobile device and object in a specific area. If there is any mobile device and object in the area, step S303 is proceeded. If there is no mobile device and object in the area, the process ends.

In an embodiment, after discovering the mobile device or the object in the area, the processor 110 may assign an identifier (ID) to the mobile device or the object. For example, the processor 110 may assign a device ID to the mobile device or assign an object ID to the object.

In step S303, the processor 110 may determine whether the number of objects in the area is equal to one. If the number of objects is equal to one, it means that one or multiple mobile devices in the area only have one unique object that may be matched. The processor 110 may match one or multiple mobile devices in the area to the unique object in step S304 to generate a matching result, wherein the matching result may record a mapping relationship between the device ID of the mobile device and the object ID of the object. The processor 110 may output the matching result through the transceiver 130. For example, if there are two mobile phones and one unique user in the area, the matching result may indicate that the two mobile phones are held by the unique user. On the other hand, if the number of objects is not equal to one, step S305 is proceeded.

In step S305, the processor 110 may determine whether the number of objects in the area is greater than two according to the positioning information and the sensed information. If the number of objects is greater than two, step S306 is proceeded. If the number of objects is equal to two, step S308 is proceeded.

In step S306, the processor 110 may receive measurement results of multiple channels between multiple mobile devices in the area, and obtain relative distances between the objects in the area. The measurement result may include a time difference of arrival (TDOA).

Specifically, the processor 110 may send a request message to the mobile devices in the area through the transceiver 130 to request the mobile devices to report the measurement results. After receiving the request message, the mobile devices may communicate based on protocols such as Wi-Fi, long term evolution (LTE) direct, LTE device-to-device (D2D), or 5G new radio (NR) PC5, thereby measuring multiple time differences of arrival between the mobile devices. After measuring the time differences of arrival, the mobile devices may send the time differences of arrival to the electronic device 100. The processor 110 may receive the time differences of arrival from the mobile devices through the transceiver 130. In an embodiment, the processor 110 may receive the measurement results before step S305.

On the other hand, the processor 110 may calculate the relative distances between the objects according to the positions of the objects in the area.

In step S307, the processor 110 may match the mobile devices with the objects according to the measurement results and the relative distances to generate the matching result. The processor 110 may output the matching result through the transceiver 130.

In step S308, the processor 110 may receive acceleration information (or gyroscope information) of the mobile device. Specifically, the processor 110 may send the request message to the mobile device in the area through the transceiver 130, wherein the mobile device may be configured with an accelerometer (or a gyroscope). After receiving the request message, the mobile device may measure the acceleration information through the accelerometer, and send the acceleration information to the electronic device 100. The processor 110 may receive the acceleration information from the mobile device through the transceiver 130. In an embodiment, the processor 110 may receive the acceleration information from the mobile device (for example, in step S301) before step S305.

In step S309, the processor 110 may match the mobile device with the object according to the acceleration information to generate the matching result. The processor 110 may output the matching result through the transceiver 130. In an embodiment, the processor 110 may match the mobile device with the object according to the acceleration information and the sensed information (for example, the orientation, the shape, or physiological information of the object) to generate the matching result. In an embodiment, the processor 110 may receive the orientation or the shape of the object after step S307.

In an embodiment, after generating the matching result, the processor 110 may track the trajectory of the mobile device and the trajectory of the object matching the mobile device according to the matching result.

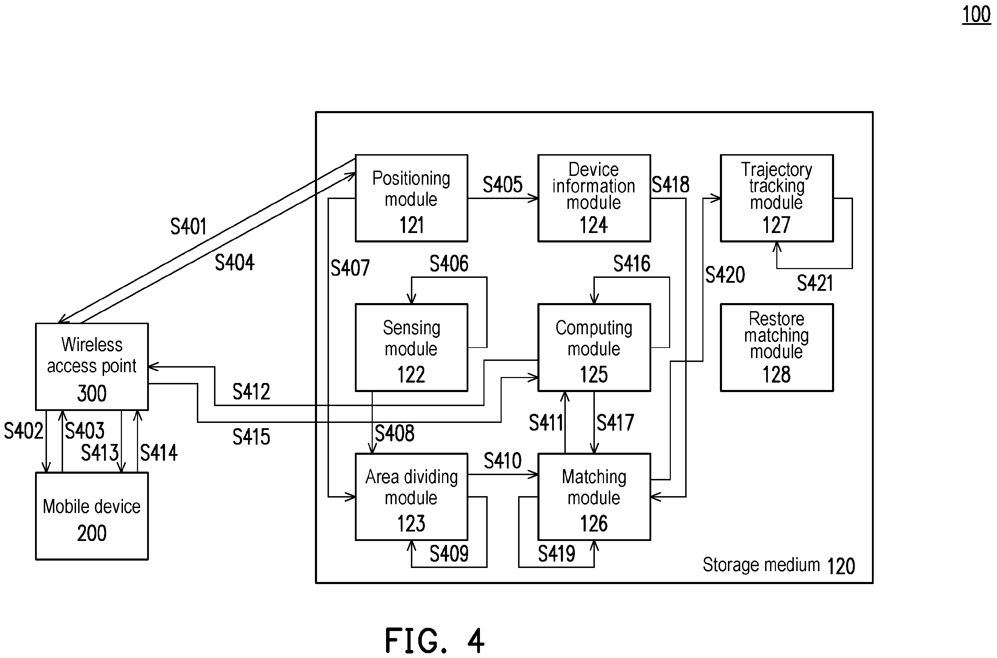

FIG. 4 is a schematic diagram of an example of a matching procedure according to an embodiment of the disclosure, wherein the procedure may be implemented by the electronic device 100 shown in FIG. 2.

In step S401, the positioning module 121 may send a request message to a wireless access point (WAP) 300 to request positioning information and acceleration information of a mobile device 200.

In step S402, the wireless access point 300 may forward the request message to the mobile device 200.

In step S403, the mobile device 200 may report the positioning information and the acceleration information to the wireless access point 300 according to the request message.

In step S404, the wireless access point 300 may forward the positioning information and the acceleration information to the positioning module 121.

In step S405, the positioning module 121 may send the acceleration information to the device information module 124. The device information module 124 may store the acceleration information.

In step S406, the sensing module 122 may obtain the sensed information. For example, the sensing module 122 may communicate with the sensor through the transceiver 130, and receive the sensed information from the sensor.

In step S407, the positioning module 121 may send the positioning information to the area dividing module 123.

In step S408, the sensing module 122 may send the sensed information to the area dividing module 123.

In step S409, the area dividing module 123 may determine whether there is any mobile device 200 and object in the area according to the positioning information and the sensed information to generate a determination result.

In step S410, the area dividing module 123 may send the determination result to the matching module 126. In response to the determination result indicating that there are the mobile device 200 and the object in the area, and the number of objects in the area is equal to one, the matching module 126 may match the mobile device 200 in the area to the object to generate the matching result. The matching result includes, for example, a mapping relationship between an ID of the area, the device ID, the object ID, the orientation of the object, or the shape of the object.

In step S411, in response to the determination result indicating that the number of objects in the area is greater than or equal to two, the matching module 126 may send a message to the computing module 125 to request the computing module 125 to report the relative distances between the objects.

In step S412, the computing module 125 may send a request message to the wireless access point 300 to request the wireless access point 300 to report the time differences of arrival between multiple mobile devices 200.

In step S413, the wireless access point 300 may forward the request message to the mobile devices 200 to request the mobile devices 200 to report the time differences of arrival.

In step S414, the mobile device 200 may measure the time differences of arrival between the mobile devices 200 according to the request message. The mobile device 200 may report the time differences of arrival to the wireless access point 300.

In step S415, the wireless access point 300 may report the time differences of arrival between the mobile devices 200 to the computing module 125.

In step S416, the computing module 125 may calculate the relative distances between the objects according to the sensed information. For example, the computing module 125 may communicate with the sensor through the transceiver 130, and receive the sensed information including the positions of the objects from the sensor. The computing module 125 may calculate the relative distances between the objects according to the positions of the objects.

In step S417, the computing module 125 may report the relative distances between the objects to the matching module 126.

In step S418, the device information module 124 may send the acceleration information of the mobile device 200 to the matching module 126.

In step S419, the matching module 126 may match the mobile devices 200 in the area to the objects according to the relative distances between the objects, the time differences of arrival between the mobile devices 200, or the acceleration information to generate the matching result. The matching result includes, for example, mapping relationships between the ID of the area, the device IDs, the object IDs, the orientations of the objects, or the shapes of the objects.

In step S420, the matching module 126 may send the matching result to the trajectory tracking module 127.

In step S421, the trajectory tracking module 127 may track the trajectory of the mobile device 200 and the trajectory of the object matching the mobile device 200 according to the matching result. The trajectory tracking module 127 may record the trajectory of the mobile device 200 or the trajectory of the object as a historical trajectory, and store the historical trajectory in the storage medium 120.

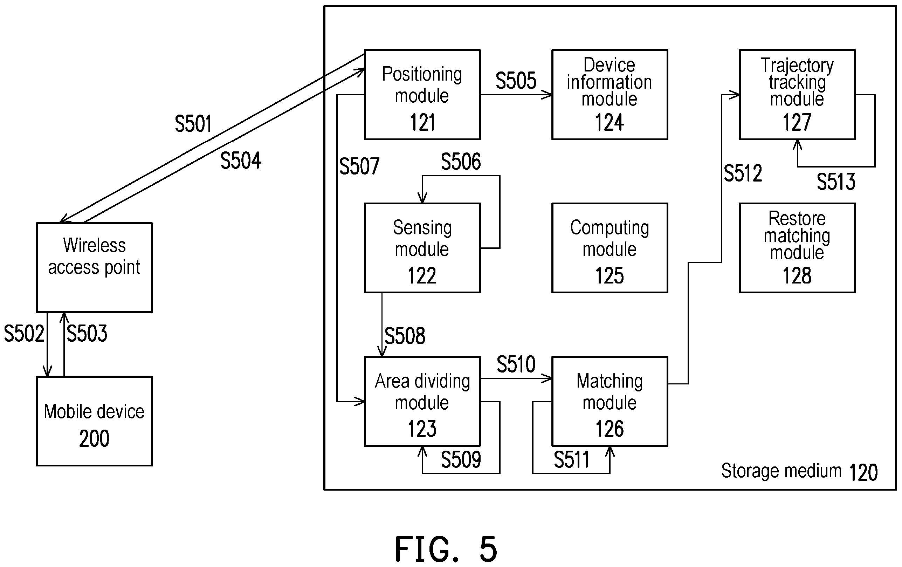

FIG. 5 is a schematic diagram of an example of a matching procedure according to an embodiment of the disclosure, wherein the procedure may be implemented by the electronic device 100 shown in FIG. 2.

In step S501, the positioning module 121 may send the request message to the wireless access point 300 to request the positioning information and the acceleration information of the mobile device 200.

In step S502, the wireless access point 300 may forward the request message to the mobile device 200.

In step S503, the mobile device 200 may report the positioning information and the acceleration information to the wireless access point 300 according to the request message.

In step S504, the wireless access point 300 may forward the positioning information and the acceleration information to the positioning module 121.

In step S505, the positioning module 121 may send the acceleration information to the device information module 124. The device information module 124 may store the acceleration information.

In step S506, the sensing module 122 may obtain the sensed information.

In step S507, the positioning module 121 may send the positioning information to the area dividing module 123.

In step S508, the sensing module 122 may send the sensed information to the area dividing module 123.

In step S509, the area dividing module 123 may determine whether there is any mobile device 200 and object in the area according to the positioning information and the sensed information, and send the determination result to the matching module 126.

In step S510, the area dividing module 123 may send the determination result to the matching module 126.

In step S511, in response to the determination result indicating that there are the mobile device 200 and the object in the area, and the number of objects in the area is equal to one, the matching module 126 may match the mobile device 200 in the area to the object to generate the matching result. The matching result includes, for example, the mapping relationship between the ID of the area, the device ID, the object ID, the orientation of the object, or the shape of the object.

In step S512, the matching module 126 may send the matching result to the trajectory tracking module 127.

In step S513, the trajectory tracking module 127 may track the trajectory of the mobile device 200 and the trajectory of the object matching the mobile device 200 according to the matching result. The trajectory tracking module 127 may record the trajectory of the mobile device 200 or the trajectory of the object as the historical trajectory, and store the historical trajectory in the storage medium 120.

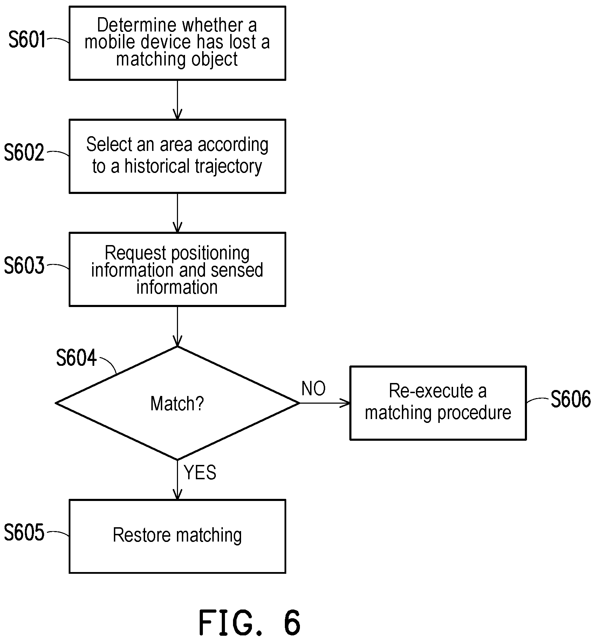

FIG. 6 is a flowchart of a restore matching procedure according to an embodiment of the disclosure, wherein the flowchart may be implemented by the electronic device 100 shown in FIG. 2.

In step S601, the processor 110 may determine whether the mobile device 200 has lost the matching object (or determine whether the object has lost the matching mobile device). Specifically, the processor 110 may track the trajectory of the mobile device 200 according to the device ID of the mobile device 200, and track the trajectory of the object according to the object ID of the object. If the processor 110 detects that the device ID of the mobile device 200 does not match the object ID of any object, the processor 110 may determine that the mobile device 200 has lost the matching object (if the processor 110 detects that the object ID of the object does not match the device ID of any mobile device 200, the processor 110 may determine that the object has lost the matching mobile device).

In step S602, in response to determining that the mobile device 200 has lost the matching object, the processor 110 may select the area where the mobile device 200 is currently located or the area where the mobile device 200 is heading to according to the historical trajectory of the mobile device 200.

In step S603, the processor 110 may request the positioning information of the mobile device 200 in the selected area and the sensed information of the object in the selected area.

In step S604, the processor 110 may determine whether the mobile device 200 matches the object according to the positioning information and the sensed information. If the processor 110 determines that the mobile device 200 and the object are located at nearby positions according to the positioning information and the sensed information, the processor 110 may determine that the mobile device 200 matches the object, and may restore the matching between the mobile device 200 and the object in step S605. If the processor 110 determines that the mobile device 200 and the object are not located at nearby positions according to the positioning information and the sensed information, the processor 110 may determine that the mobile device 200 and the object do not match, and may re-execute the matching procedure on the mobile device 200 or the object in step S606. For example, the processor 110 may execute the process shown in FIG. 3 on the mobile device 200 or the object.

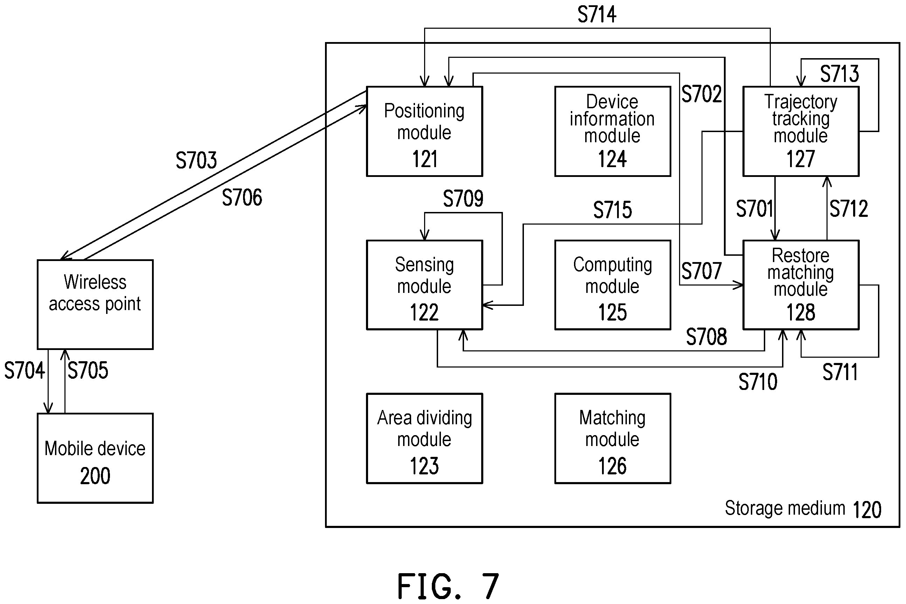

FIG. 7 is a schematic diagram of an example of a restore matching procedure according to an embodiment of the disclosure, wherein the procedure may be implemented by the electronic device 100 shown in FIG. 2.

In step S701, after the trajectory tracking module 127 determines that the mobile device 200 has lost the matching object (or determines that the object has lost the matching mobile device) according to the device ID of the mobile device 200, the object ID of the object, or the historical trajectory, the trajectory tracking module 127 may select the area where the mobile device 200 (or the object) is currently located or the area where the mobile device 200 (or the object) is heading to from multiple areas according to the historical trajectory. In addition, the trajectory tracking module 127 may send a restore matching request to the restore matching module 128.

In step S702, the restore matching module 128 may send a request message to the positioning module 121 to request the positioning information of the mobile device 200 in the selected area, wherein the request message may include the device ID of the mobile device 200.

In step S703, the positioning module 121 may forward the request message to the wireless access point 300 to request the positioning information of the mobile device 200.

In step S704, the wireless access point 300 may send the request message to the mobile device 200 to request the positioning information of the mobile device 200.

In step S705, the mobile device 200 may report the positioning information to the wireless access point 300.

In step S706, the wireless access point 300 may report the positioning information of the mobile device 200 to the positioning module 121.

In step S707, the positioning module 121 may forward the positioning information of the mobile device 200 to the restore matching module 128.

In step S708, the restore matching module 128 may send a request message to the sensing module 122 to request the sensed information of the object in the selected area, wherein the sensed information may include the object ID of the object.

In step S709, the sensing module 122 may obtain the sensed information of the object.

In step S710, the sensing module 122 may report the sensed information of the object to the restore matching module 128.

In step S711, the restore matching module 128 may determine whether the mobile device 200 matches the object according to the positioning information of the mobile device 200 and the sensed information of the object to generate the matching result.

In step S712, the restore matching module 128 may send the matching result to the trajectory tracking module 127. If the mobile device 200 matches the object, the matching result may include a mapping relationship between the device ID of the mobile device 200 and the object ID of the object. If the mobile device 200 does not match the object, the matching result may not include the mapping relationship between the device ID of the mobile device 200 and the object ID of the object.

In step S713, the trajectory tracking module 127 may re-track the mobile device 200 (or the object) according to the matching result or delete the mobile device 200 that has lost the matching object (or the object that has lost the matching mobile device) from a tracking list.

If the mobile device 200 has lost the matching object (or the object has lost the matching mobile device), in step S714, the trajectory tracking module 127 may send a request message to the positioning module 121 to request the positioning module 121 to re-execute the matching procedure. In step S715, the trajectory tracking module 127 may send a request message to the sensing module 122 to request the sensing module 122 to re-execute the matching procedure.

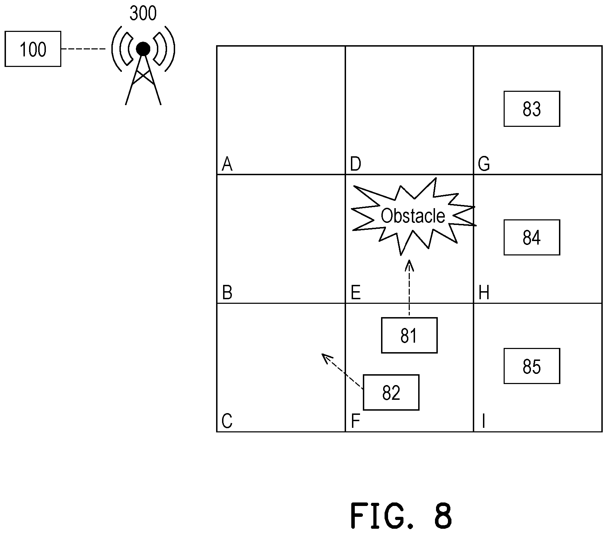

FIG. 8 is a schematic diagram of AGV task management in a smart factory according to an embodiment of the disclosure, wherein the AGV task management may be implemented by the electronic device 100 shown in FIG. 2. The electronic device 100 may be communicatively connected to the wireless access point 300, and serve the mobile devices or the objects within the coverage range through the wireless access point 300. In the embodiment, the coverage range of the electronic device 100 is divided into the area A, the area B, the area C, the area D, the area E, the area F, the area G, the area H, and the area I. A robotic arm 83, a robotic arm 84, and a robotic arm 85 are respectively fixed in the area G, the area H, and the area I. An AGV 81 is moving from the area F to the area E, and an AGV 82 is moving from the area F to the area C. Each of the AGV 81, the AGV 82, the robotic arm 83, the robotic arm 84, and the robotic arm 85 is configured with a mobile device.

The electronic device 100 may detect the dumping of goods in the area E through the sensor. The electronic device 100 may obtain the sensed information and the positioning information of the AGV 81, the AGV 82, the robotic arm 83, the robotic arm 84, and the robotic arm 85 through the wireless access point 300 and the sensor, as shown in steps S401, S402, S403, S404, and S406 in FIG. 4. The electronic device 100 may determine whether there is an AGV or a robotic arm in a specific area according to the positioning information and the sensed information to generate the determination result, as shown in steps S405, S407, S408, and S409 in FIG. 4. Since there is only a single robotic arm 83 in the area G, the electronic device 100 may directly determine that the robotic arm 83 matches the mobile device disposed on the robotic arm 83. Based on the same reason, the electronic device 100 may determine that the robotic arm 84 matches the mobile device disposed on the robotic arm 84, and may determine that the robotic arm 85 matches the mobile device disposed on the robotic arm 85.

Since the area F includes two AGVs, the electronic device 100 needs to further obtain the acceleration information of the AGV 81 and the AGV 82. After obtaining the acceleration information of the AGV 81 and the AGV 82, the electronic device 100 may match the AGV 81 with the mobile device disposed on the AGV 81, and match the AGV 82 with the mobile device disposed on the AGV 82 according to the acceleration information and the sensed information of the AGV 81 and the AGV 82. After completing the matching procedure, the electronic device 100 may track the AGV 81 and the AGV 82 according to the matching result. Since an obstacle appears on the route of the AGV 81, the electronic device 100 may send a command to the AGV 81 to instruct the AGV 81 to change the route to avoid the obstacle.

After generating the matching result, assuming that an object blocks the sensor, causing the mobile device of the AGV 81 to lose the matching object (that is, the AGV 81), the electronic device 100 may execute the restore matching procedure. Specifically, the trajectory tracking module 127 of the electronic device 100 may select the area F where the AGV 81 is currently located or the area E where the AGV 81 is heading to as the selected area according to the historical trajectory of the AGV 81. The trajectory tracking module 127 sends the restore matching request to the restore matching module 128, as shown in step S701 in FIG. 7. The restore matching module 128 may send the request message to the positioning module 121 to request the positioning information of the mobile device in the selected area, as shown in step S702 in FIG. 7. Then, the positioning module 121 may obtain the positioning information of the mobile device from the mobile device through the wireless access point 300, as shown in steps S703, S704, S705, and S706 in FIG. 7. The positioning module 121 may forward the positioning information of the mobile device to the restore matching module 128, as shown in step S707 in FIG. 7.

On the other hand, the restore matching module 128 may send the request message to the sensing module 122 to request the sensed information of the AGV 81 in the selected area, as shown in step S708 in FIG. 7. The sensing module 122 may obtain the sensed information of the AGV 81, and report the sensed information to the restore matching module 128, as shown in step S709 and step S710 in FIG. 7. The restore matching module 128 may determine that the mobile device matches the AGV 81 according to the positioning information of the mobile device and the sensed information of the AGV 81 to generate the matching result, as shown in step S711 in FIG. 7. The restore matching module 128 may send the matching result to the trajectory tracking module 127, and the trajectory tracking module 127 may re-track the AGV 81 and the mobile device thereof according to the matching result, as shown in step S712 and step S713 in FIG. 7.

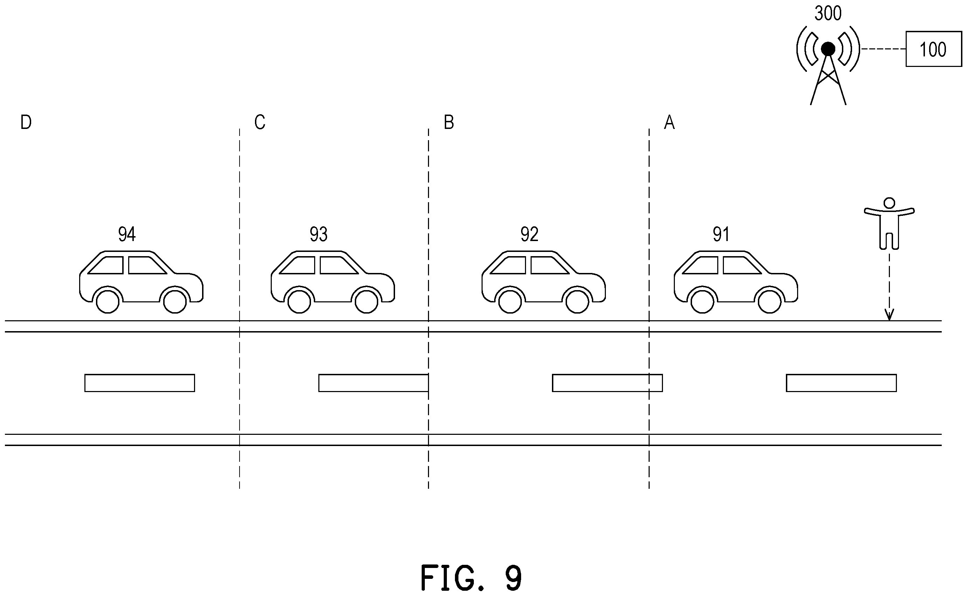

FIG. 9 is a schematic diagram of a real-time accident notification based on Internet of Vehicles according to an embodiment of the disclosure, wherein the real-time accident notification may be implemented by the electronic device 100 shown in FIG. 2. The electronic device 100 may be communicatively connected to the wireless access point 300, and serve the mobile devices or the objects within the coverage range through the wireless access point 300. In the embodiment, the coverage range of the electronic device 100 is divided into the area A, the area B, the area C, and the area D. A vehicle 91, a vehicle 92, a vehicle 93, and a vehicle 94 are respectively located in the area A, the area B, the area C, and the area D. Each of the vehicle 91, the vehicle 92, the vehicle 93, and the vehicle 94 is configured with a mobile device (for example, an on-board computer).

The electronic device 100 may detect a pedestrian crossing the road through the sensor, and trigger the execution of the matching procedure. The electronic device 100 may obtain the sensed information of the vehicle 91, the vehicle 92, the vehicle 93, and the vehicle 94 through the sensor, and may obtain the positioning information of the mobile device of the vehicle 91, the mobile device of the vehicle 92, the mobile device of the vehicle 93, and the mobile device of the vehicle 94 through the wireless access point 300, as shown in steps S501, S502, S503, S504, S505, and S506 in FIG. 5. Then, the electronic device 100 may determine that the vehicle 91, the vehicle 92, the vehicle 93, and the vehicle 94 are respectively located in the area A, the area B, the area C, and the area D according to the positioning information and the sensed information, and generate the determination result, as shown in steps S507, S508, S509, and S510 in FIG. 5. After obtaining the determination result, the electronic device 100 may match the vehicle 91 with the area A, the vehicle 92 with the area B, the vehicle 93 with the area C, and the vehicle 94 with the area D according to the determination result to generate the matching result, as shown in step S511 in FIG. 5. Then, the electronic device 100 may send a real-time accident notification message to the mobile device of the vehicle A, the mobile device of the vehicle B, the mobile device of the vehicle C, and the mobile device of the vehicle D according to the matching result.

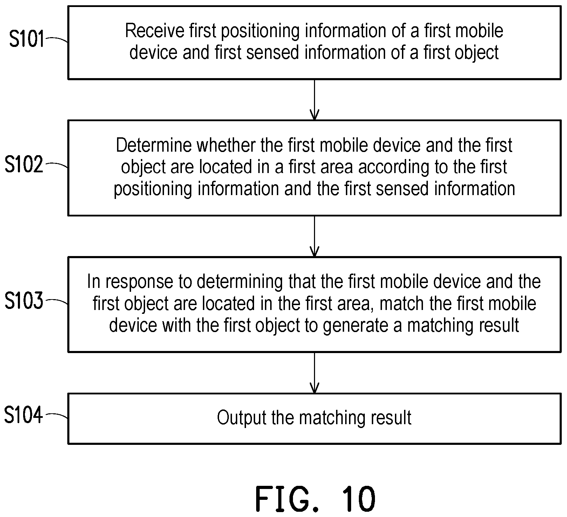

FIG. 10 is a flowchart of a method of matching a mobile device with an object according to an embodiment of the disclosure, wherein the method may be implemented by the electronic device 100 shown in FIG. 2. In step S101, first positioning information of a first mobile device and first sensed information of a first object are received. In step S102, whether the first mobile device and the first object are located in a first area is determined according to the first positioning information and the first sensed information. In step S103, in response to determining that the first mobile device and the first object are located in the first area, the first mobile device is matched with the first object to generate a matching result. In step S104, the matching result is output.

In summary, in the disclosure, the mobile device may be matched with the object according to the positioning information of the mobile device and the sensed information of the object. When multiple mobile devices or multiple objects are located in the same area, making matching difficult, the mobile devices or the objects in the area may be further analyzed based on the channel measurement results, the relative distances of the objects, or the acceleration information in the disclosure, thereby correctly completing the matching. The matching result of the mobile device and the object may be provided to the user. The user may provide a holder of the mobile device with personalized services such as advertising according to the matching result. For example, telecom operators may send different advertising messages to groups of people with different characteristics based on the matching result to increase the efficiency of advertising and prevent irrelevant people from receiving too many spam messages.

It will be apparent to those skilled in the art that various modifications and variations may be made to the structure of the disclosed embodiments without departing from the scope or spirit of the disclosure. In view of the foregoing, it is intended that the disclosure cover modifications and variations of the disclosure provided they fall within the scope of the following claims and their equivalents.

## Claims

1. A method of matching a mobile device (200) with an object, comprising:
receiving first positioning information of a first mobile device (200) and first sensed information of a first object;
determining whether the first mobile device (200) and the first object are located in a first area (A, B, C, D, E, F, G, H, I, J, K, L, M, N, O, P) according to the first positioning information and the first sensed information;
in response to determining that the first mobile device (200) and the first object are located in the first area (A, B, C, D, E, F, G, H, I, J, K, L, M, N, O, P), matching the first mobile device (200) with the first object to generate a matching result; and
outputting the matching result.

2. The method according to claim 1, wherein in response to determining that the first mobile device (200) and the first object are located in the first area (A, B, C, D, E, F, G, H, I, J, K, L, M, N, O, P), matching the first mobile device (200) with the first object to generate the matching result comprises:
determining a number of objects in the first area (A, B, C, D, E, F, G, H, I, J, K, L, M, N, O, P); and
matching the first mobile device (200) with the first object according to the number of objects.

3. The method according to claim 2, wherein matching the first mobile device (200) with the first object according to the number of objects comprises:
in response to determining that the number of objects is equal to one, matching the first mobile device (200) with the first object.

4. The method according to claim 2, wherein matching the first mobile device (200) with the first object according to the number of objects comprises:
in response to determining that the number of objects is greater than two, receiving a measurement result corresponding to the first mobile device (200) and a second mobile device (200) in the first area (A, B, C, D, E, F, G, H, I, J, K, L, M, N, O, P), and obtaining a relative distance between the first object and a second object in the first area (A, B, C, D, E, F, G, H, I, J, K, L, M, N, O, P); and
matching the first mobile device (200) with the first object according to the measurement result and the relative distance.

5. The method according to claim 4, wherein the measurement result comprises a time difference of arrival.

6. The method according to claim 2, wherein matching the first mobile device (200) with the first object according to the number of objects further comprises:
in response to determining that the number of objects is equal to two, receiving acceleration information of the first mobile device (200); and
matching the first mobile device (200) with the first object according to the acceleration information.

7. The method according to claim 1, wherein the method further comprises:
determining whether a second mobile device (200) has lost a matching object of the second mobile device (200);
in response to determining that the second mobile device (200) has lost the matching object, selecting a second area (A, B, C, D, E, F, G, H, I, J, K, L, M, N, O, P) according to a historical trajectory of the second mobile device (200);
requesting second positioning information of the second mobile device (200) and second sensed information of a second object in the second area (A, B, C, D, E, F, G, H, I, J, K, L, M, N, O, P); and
determining the second object to be the matching object of the second mobile device (200) according to the second positioning information and the second sensed information.

8. The method according to claim 1, further comprising:
querying a lookup table according to the first positioning information and the first sensed information to determine whether the first mobile device (200) and the first object are located in the first area (A, B, C, D, E, F, G, H, I, J, K, L, M, N, O, P).

9. The method according to claim 1, further comprising:
tracking trajectories of the first mobile device (200) and the first object according to the matching result.

10. The method according to claim 1, wherein the first positioning information comprises at least one of channel state information, received signal strength indication, reference signal received power, reference signal received quality, or global positioning system information.

11. The method according to claim 1, wherein the first sensed information comprises a position.

12. The method according to claim 11, wherein the first sensed information further comprises at least one of an orientation, a shape, or physiological information.

13. The method according to claim 1, wherein the first sensed information is associated with at least one of a radar signal, an image, a sound, or a light signal.

14. An electronic device (100) of matching a mobile device (200) with an object, comprising:
a transceiver (130);
a storage medium (120), configured to store a plurality of modules; and
a processor (110), coupled to the storage medium (120) and the transceiver (130), and configured to access and execute the modules, wherein the modules comprise:
a positioning module (121), configured to receive first positioning information of a first mobile device (200) through the transceiver (130);
a sensing module (122), configured to receive first sensed information of a first object through the transceiver (130);
an area dividing module (123), configured to determine whether the first mobile device (200) and the first object are located in a first area (A, B, C, D, E, F, G, H, I, J, K, L, M, N, O, P) according to the first positioning information and the first sensed information; and
a matching module (126), configured to match the first mobile device (200) with the first object to generate a matching result in response to determining that the first mobile device (200) and the first object are located in the first area (A, B, C, D, E, F, G, H, I, J, K, L, M, N, O, P), wherein the matching module (126) outputs the matching result.

15. The electronic device (100) according to claim 14, wherein:
the matching module (126) determines a number of objects in the first area (A, B, C, D, E, F, G, H, I, J, K, L, M, N, O, P), and matches the first mobile device (200) with the first object according to the number of objects.

16. The electronic device (100) according to claim 15, wherein:
in response to the number of objects being equal to one, the matching module (126) matches the first mobile device (200) with the first object.

17. The electronic device (100) according to claim 15, wherein:
in response to determining that the number of objects is greater than two, the matching module (126) receives a measurement result corresponding to the first mobile device (200) and a second mobile device (200) in the first area (A, B, C, D, E, F, G, H, I, J, K, L, M, N, O, P), and obtains a relative distance between the first object and a second object in the first area (A, B, C, D, E, F, G, H, I, J, K, L, M, N, O, P), wherein
the matching module (126) matches the first mobile device (200) with the first object according to the measurement result and the relative distance.

18. The electronic device (100) according to claim 17, wherein the measurement result comprises a time difference of arrival.

19. The electronic device (100) according to claim 15, wherein:
in response to determining that the number of objects is equal to two, the matching module (126) receives acceleration information of the first mobile device (200), wherein
the matching module (126) matches the first mobile device (200) with the first object according to the acceleration information.

20. The electronic device (100) according to claim 14, wherein the modules further comprise:
a trajectory tracking module (127), configured to determine whether a second mobile device (200) has lost a matching object of the second mobile device (200), and select a second area (A, B, C, D, E, F, G, H, I, J, K, L, M, N, O, P) according to a historical trajectory of the second mobile device (200) in response to determining that the second mobile device (200) has lost the matching object; and
a restore matching module (128), configured to request second positioning information of the second mobile device (200) and second sensed information of a second object in the second area (A, B, C, D, E, F, G, H, I, J, K, L, M, N, O, P), wherein
the restore matching module (128) determines that the second object is the matching object of the second mobile device (200) according to the second positioning information and the second sensed information.

## Amended claims

### Amended claims in accordance with Rule 137(2) EPC.

1. A method, **characterized in** matching a mobile device (200) with an object, comprising:
receiving first positioning information of a first mobile device (200) and first sensed information of a first object;
determining whether the first mobile device (200) and the first object are located in a first area (A, B, C, D, E, F, G, H, I, J, K, L, M, N, O, P) according to the first positioning information and the first sensed information;
in response to determining that the first mobile device (200) and the first object are located in the first area (A, B, C, D, E, F, G, H, I, J, K, L, M, N, O, P), matching the first mobile device (200) with the first object to generate a matching result; and
outputting the matching result.

2. The method according to claim 1, wherein in response to determining that the first mobile device (200) and the first object are located in the first area (A, B, C, D, E, F, G, H, I, J, K, L, M, N, O, P), matching the first mobile device (200) with the first object to generate the matching result comprises:
determining a number of objects in the first area (A, B, C, D, E, F, G, H, I, J, K, L, M, N, O, P); and
matching the first mobile device (200) with the first object according to the number of objects.

3. The method according to claim 2, wherein matching the first mobile device (200) with the first object according to the number of objects comprises:
in response to determining that the number of objects is equal to one, matching the first mobile device (200) with the first object.

4. The method according to claim 2, wherein matching the first mobile device (200) with the first object according to the number of objects comprises:
in response to determining that the number of objects is greater than two, receiving a measurement result corresponding to the first mobile device (200) and a second mobile device (200) in the first area (A, B, C, D, E, F, G, H, I, J, K, L, M, N, O, P), and obtaining a relative distance between the first object and a second object in the first area (A, B, C, D, E, F, G, H, I, J, K, L, M, N, O, P); and
matching the first mobile device (200) with the first object according to the measurement result and the relative distance.

5. The method according to claim 4, wherein the measurement result comprises a time difference of arrival.

6. The method according to claim 2, wherein matching the first mobile device (200) with the first object according to the number of objects further comprises:
in response to determining that the number of objects is equal to two, receiving acceleration information of the first mobile device (200); and
matching the first mobile device (200) with the first object according to the acceleration information.

7. The method according to claim 1, wherein the method further comprises:
determining whether a second mobile device (200) has lost a matching object of the second mobile device (200);
in response to determining that the second mobile device (200) has lost the matching object, selecting a second area (A, B, C, D, E, F, G, H, I, J, K, L, M, N, O, P) according to a historical trajectory of the second mobile device (200);
requesting second positioning information of the second mobile device (200) and second sensed information of a second object in the second area (A, B, C, D, E, F, G, H, I, J, K, L, M, N, O, P); and
determining the second object to be the matching object of the second mobile device (200) according to the second positioning information and the second sensed information.

8. The method according to claim 1, further comprising:
querying a lookup table according to the first positioning information and the first sensed information to determine whether the first mobile device (200) and the first object are located in the first area (A, B, C, D, E, F, G, H, I, J, K, L, M, N, O, P).

9. The method according to claim 1, further comprising:
tracking trajectories of the first mobile device (200) and the first object according to the matching result.

10. The method according to claim 1, wherein the first positioning information comprises at least one of channel state information, received signal strength indication, reference signal received power, reference signal received quality, or global positioning system information.

11. The method according to claim 1, wherein the first sensed information comprises a position.

12. The method according to claim 11, wherein the first sensed information further comprises at least one of an orientation, a shape, or physiological information.

13. The method according to claim 1, wherein the first sensed information is associated with at least one of a radar signal, an image, a sound, or a light signal.

14. An electronic device (100) **characterized in** matching a mobile device (200) with an object, comprising:
a transceiver (130);
a storage medium (120), configured to store a plurality of modules; and
a processor (110), coupled to the storage medium (120) and the transceiver (130), and configured to access and execute the modules, wherein the modules comprise:
a positioning module (121), configured to receive first positioning information of a first mobile device (200) through the transceiver (130);
a sensing module (122), configured to receive first sensed information of a first object through the transceiver (130);
an area dividing module (123), configured to determine whether the first mobile device (200) and the first object are located in a first area (A, B, C, D, E, F, G, H, I, J, K, L, M, N, O, P) according to the first positioning information and the first sensed information; and
a matching module (126), configured to match the first mobile device (200) with the first object to generate a matching result in response to determining that the first mobile device (200) and the first object are located in the first area (A, B, C, D, E, F, G, H, I, J, K, L, M, N, O, P), wherein the matching module (126) outputs the matching result.

15. The electronic device (100) according to claim 14, wherein:
the matching module (126) determines a number of objects in the first area (A, B, C, D, E, F, G, H, I, J, K, L, M, N, O, P), and matches the first mobile device (200) with the first object according to the number of objects.

16. The electronic device (100) according to claim 15, wherein:
in response to the number of objects being equal to one, the matching module (126) matches the first mobile device (200) with the first object.

17. The electronic device (100) according to claim 15, wherein:
in response to determining that the number of objects is greater than two, the matching module (126) receives a measurement result corresponding to the first mobile device (200) and a second mobile device (200) in the first area (A, B, C, D, E, F, G, H, I, J, K, L, M, N, O, P), and obtains a relative distance between the first object and a second object in the first area (A, B, C, D, E, F, G, H, I, J, K, L, M, N, O, P), wherein
the matching module (126) matches the first mobile device (200) with the first object according to the measurement result and the relative distance.

18. The electronic device (100) according to claim 17, wherein the measurement result comprises a time difference of arrival.

19. The electronic device (100) according to claim 15, wherein:
in response to determining that the number of objects is equal to two, the matching module (126) receives acceleration information of the first mobile device (200), wherein
the matching module (126) matches the first mobile device (200) with the first object according to the acceleration information.

20. The electronic device (100) according to claim 14, wherein the modules further comprise:
a trajectory tracking module (127), configured to determine whether a second mobile device (200) has lost a matching object of the second mobile device (200), and select a second area (A, B, C, D, E, F, G, H, I, J, K, L, M, N, O, P) according to a historical trajectory of the second mobile device (200) in response to determining that the second mobile device (200) has lost the matching object; and
a restore matching module (128), configured to request second positioning information of the second mobile device (200) and second sensed information of a second object in the second area (A, B, C, D, E, F, G, H, I, J, K, L, M, N, O, P), wherein
the restore matching module (128) determines that the second object is the matching object of the second mobile device (200) according to the second positioning information and the second sensed information.
